# EUROPEAN PATENT APPLICATION

(11) **EP 3 309 532 A2**
(43) Date of publication of application: **18.04.2018**
(21) Application number: 17192512.6
(22) Date of filing: 22.09.2017
(51) Int. Cl.: G01M 17/007

(54) **TEST STAND FOR MOTOR VEHICLES**

(30) Priority: 23.09.2016 CZ 201632851 U
(71) Applicant: ACTIA CZ s.r.o., 39001 Czech Republic Tábor (CZ)
(72) Inventor: HOREJSI, Josef, 39161 Oparany (CZ); MASAT, Frantisek, 39005 Tabor (CZ); FREITAG, Petr, 39155 Chynov (CZ); BRDEK, Jan, 25901 Votice (CZ)
(74) Representative: Sedlák, Jirí

(57) **Abstract**

The test stand (1) for motor vehicles, which is intended for emission testing of two-track motor vehicles with the engine running at load, comprises at least partially covered square- or rectangular-shaped supporting frame (2) adapted to horizontal installation on the floor. In its front half, the test stand (1) is equipped with two roller assemblies (6) constituting the front pair (4) of roller assemblies (6) and at the same time, in its rear half, the test stand (1) is equipped with two roller assemblies (6) constituting the rear pair (5) of roller assemblies (6), while the rear pair (5) of roller assemblies (6) in the supporting frame (2) is arranged with the possibility of movement to set the distance from the front pair (4) of roller assemblies (6) to adjust the wheelbase of the motor vehicle tested, and at the same time, the rollers (6) have the maximum diameter below 200 mm and are coupled to each other in a movable manner to enable their common spinning by motor vehicle wheels.

## Description

### Field of the invention

The present invention relates to a test stand for emission testing of two-track motor vehicles.

### Background of the invention

Two-track motor vehicles equipped with internal combustion engines are currently dominant on roads. Internal combustion engines produce emissions, or exhaust gases and solid particles, which have a substantial impact on air quality given the general widespread nature. The effort of legislators and manufacturers of motor vehicles is to reduce emissions to the defined more acceptable limits, while controlling compliance with these limits as part of periodic inspections. Exhaust gases typically include water vapour, nitrogen, and carbon dioxide. In addition, exhaust gases may contain nitrogen oxides, carbon monoxide, dust particles, and other components.

There are devices for performing emission testing of motor vehicles, which are attached to the exhaust gas outlet of the motor vehicle. The vehicle engine shall be started, after which the device starts analysing exhaust gases. The analysis is generally carried out for the engine running at the level of idle speed and further at the level of increased speed as necessary for the testing performed. The disadvantages of this solution are that the testing is performed with the engine, which is not significantly power-loaded. The engine overcomes only its constructive mechanical losses and constructive mechanical losses of the gearbox without the gear engaged, while demonstrating that the degree of representation of individual components in exhaust gases changes depending on engine load, while this concerns the most nitrogen oxides, which are generated at high temperatures and pressures. Emission testing without power load on an engine is not objective, while some modern engines can be programmed as to have the operating parameters in actual-load running other than those in load running.

In order to address the above mentioned disadvantages, emission testing devices were developed, which can be temporarily installed in the motor vehicle to allow the vehicle to make the real ride, which will involve emission testing. However, the disadvantages of this solution are in the requirements for emission testing hardware as well as in difficult installation of the measuring device in the vehicle and last but not least, in safety risks related to the property and health of other road users. At the same time, such emission testing is difficult to repeat objectively, because engine operation is affected by actual ambient temperature, air humidity, air flow, track for test run, real driving conditions on a test track, etc.

On the basis of the above mentioned facts, test stands were developed, which remove the most pressing disadvantages of the current state of the art. Such test stands include but are not limited to the invention presented in the international patent application document WO 97/32189 A. The invention consists of two access ramps for motor vehicle wheels, where each of the access ramps is equipped with the rollers configured in the assembly for rolling the driven wheels of the motor vehicle and with the safety roller to prevent the vehicle wheels from diverting from the rollers. The access ramps are sliding arranged on the common guide rod to adjust them to the wheelbase of the motor vehicle tested. The energy dissipator is connected to the rollers of the access ramps, which simulates the real driving load on the vehicle engine. The disadvantages of this invention are in that the solution is not suitable for four-wheel drive vehicles and for vehicles equipped with electronic safety systems, which limit the engine running when detecting standing of the remaining vehicle wheels or when used at different load on drive wheels.

Another known invention involving the test stand for motor vehicles is presented in the patent application US 2006/0130567 A1. The rollers are built in below ground level, while they are constructed as rollers of large diameter. The disadvantages of this invention are that the invention is intended for rolling the wheels of only one axle of the motor vehicle and that the device of the invention must be built in below ground level. Building up a new floor space in the motor vehicle testing room for installing the test stand, or renovating the existing space of the motor vehicle testing rooms is expensive, thus making the total cost price disadvantageous to the operators of motor vehicle testing rooms.

The purpose of the Invention is to build up a test stand for emission testing of motor vehicles, which would be applicable to a whole range of two-track motor vehicles, which would allow for testing of emissions from loaded engine of motor vehicle, which would be safe in operation, and which would have minimum requirements on renovation of the existing space or construction of a new space in the motor vehicle testing room in order to install it in the motor vehicle testing room.

### Summary of the invention

The set task has been resolved by means of the test stand for motor vehicles according to the following invention.

The test stand for motor vehicles comprises at least partially covered square- or rectangular-shaped supporting frame adapted to horizontal installation on the floor. Furthermore, it comprises at least one access ramp to move motor vehicle wheels on the supporting frame and at least one energy dissipator attached to the supporting frame. The test stand includes at leas one assembly of at least two rollers to roll motor vehicle wheels arranged inside the supporting frame, while at least one roller assembly is coupled to the energy dissipator to transmit energy from the motor vehicle wheels to the energy dissipator.

The summary of the invention rests in the fact that the front half of the test stand is equipped with two roller assemblies comprising the front pair of roller assemblies and the rear half of the test stand is equipped with two roller assemblies comprising the rear pair of roller assemblies. At the same time, the rear pair of roller assemblies in the supporting frame is arranged with the possibility of movement to set the distance from the front pair of roller assemblies to adjust the wheelbase of the motor vehicle tested. Last but not least, the rollers have the maximum diameter below 200 mm and are coupled to each other in a movable manner to enable their common spinning by motor vehicle wheels.

Thanks to the front and rear pairs of roller assemblies, the car is stable on the test stand when spinning the wheels by means of the engine. At the same time, all wheels and rollers are spun at the same speed and force owing to the coupling of rollers so that the electronic safety systems of the vehicle have no need to modify the engine power mode as in cases when some vehicle wheels spin faster than the remaining wheels. Also, the test stand is suitable for vehicles that have four-wheel drive (4x4), when the engine power is transmitted to both axles of the motor vehicle. The small diameter of rollers allows to use the stand on a horizontal surface, without having to build it in, because the rollers are arranged inside the supporting frame, onto which the vehicle is driven by means of access ramps. Last but not least, the great advantage of the test stand is the adjustable distance of the rear pair of roller assemblies from the front pair of roller assemblies, thus adapting the test stand to the vehicles of the category of small two-box bodies, through sedans, off-road vehicles, sport utility vehicles (SUV), or two-axle transporters, etc.

In a preferred version of the test stand according to the invention, the front rollers of the front pair of roller assemblies have the horizontal tangential plane lying higher than the horizontal tangential plane of the remaining rollers of the front pair of roller assemblies. When spinning the motor vehicle wheels, the application of the forces press the wheels against the front roller. Due to its higher installation in the test stand, the effects of pressing the spun wheel are adjusted in a way that the vehicle does not tend to slide downward of the test stand and the test is performed in a safer manner.

In another preferred version of the test stand according to the invention, the test stand is equipped with at least one folding safety roller, which is parallel to the roller, and which is arranged in front of the front pair of roller assemblies. At the same time, the horizontal tangential plane of the folding safety roller in unfolded position lies higher than the horizontal tangential planes of the rollers of the front pair of roller assemblies. Should the vehicle run out of the test stand, e.g. due to unexpected impulse of force transmitted to the vehicle in a forward direction in the accident at the workplace of the test stand, the front wheels of the vehicle stop by safety roller.

In another preferred version of the test stand according to the invention, the front pair of roller assemblies and the rear pair of roller assemblies are interconnected to set the distance from each other by means of the rotating internal threaded bushing and the threaded rod at least partially arranged in the rotating bushing, while the rotating bushing is arranged in the front half of the test stand and the threaded rod is arranged in the rear half of the test stand. Taking advantage of the thread provides slow feed motion accompanied by a large tractive force, so this solution appears to be the perfect solution for handling of the rear half of the test stand. Also, the threaded rod is inserted into the bushing so that it does not protrude and does not pose a safety risk.

In another preferred version of the test stand according to the invention, the front pair of roller assemblies and the rear pair of roller assemblies are coupled to each other in a movable manner by means of at least one telescopic shaft arranged inside the supporting frame. The telescopic shaft can transmit mechanical energy, whether any distance is adjusted between the front pair of roller assemblies and the rear pair of roller assemblies within the allowed maximum and minimum limits.

In another preferred version of the test stand according to the invention, the test stand is equipped with the driving device coupled in a movable manner to the rollers in order to detect mechanical losses of the rotating parts of the test stand. When the vehicle is not on the rollers, the driving device spins the rollers by transmitting the known amount of mechanical energy to determine the losses of mechanical energy due to friction and other influences in the test stand. The advantage is that the test stand is equipped with at least one physical quantity sensor of the group of tachometer, dynamometer, and/or at least one electronic safety device of the group of optoelectronic barrier, distance sensor. Determining the losses of energy in advance can subsequently lead to very accurate wheel load measurement.

The advantages of the invention include the minimum requirements for installation of the test stand in the motor vehicle testing room, as well as the universality of the test stand for a wide range of the vehicles of various categories from family vehicles, through commercial, sport and off-road vehicles. It is also advantageous that the stand spins all vehicle wheels and transmits energy among them all at once, so that the electronic safety systems of the vehicles do not tend, for example, to turn off the engine as part of the safety protocols, as the WSP systems can. The stand allows to truly load the vehicle engine so that the tests can be performed, which would be difficult to perform and repeat in real driving.

### Explanation of drawings

The present invention will be explained in detail by means of the following figures where:
- Fig. 1: shows the view of the covered test stand in an axonometric view,
- Fig. 2: shows the view of the uncovered test stand in an axonometric view,
- Fig. 3: shows the top view of the uncovered test stand,
- Fig. 4: shows a close-up top view of the front half of the test stand,
- Fig. 5: shows a close-up top view of the rear half of the test stand,
- Fig. 6: shows a close-up axonometric view of the telescopic shaft in the minimum extreme position,
- Fig. 7: shows a close-up axonometric view of the telescopic shaft in the maximum extreme position,
- Fig. 8: shows a close-up axonometric view of internal threaded bushing drive,
- Fig. 9: shows a close-up axonometric view of one of the assemblies of the front pair of roller assemblies,
- Fig. 10: shows a close-up axonometric view of the attachment of the energy dissipator to the supporting frame,
- Fig. 11: shows a close-up axonometric view of the belt transmission.

### Example of the invention embodiments

It shall be understood that the specific cases of the invention embodiments described and depicted below are provided for illustration only and do not limit the invention to the examples provided here. Those skilled in the art will find or, based on routine experiment, will be able to provide a greater or lesser number of equivalents to the specific embodiments of the invention which are described here. Also such equivalents will be included in the scope of the following claims.

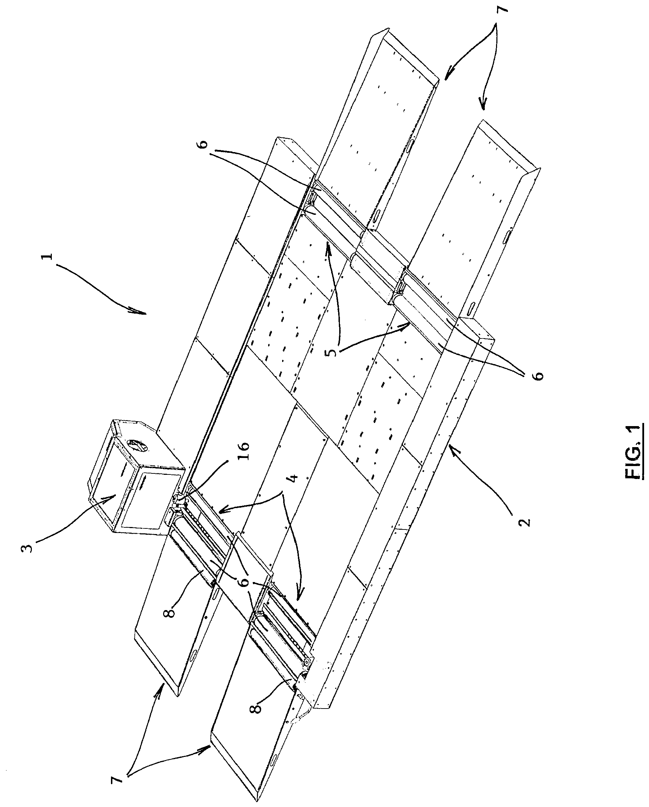

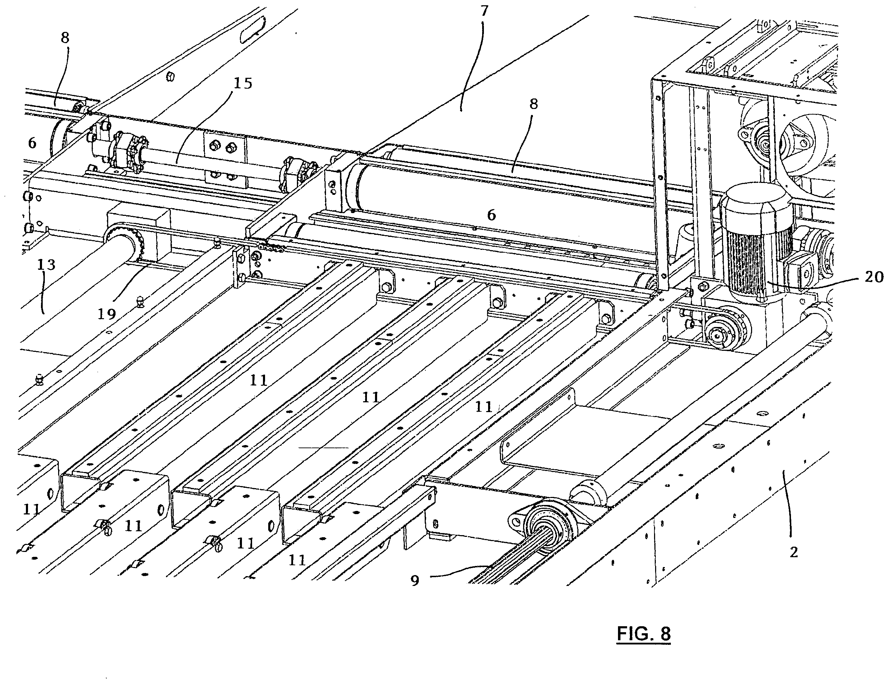

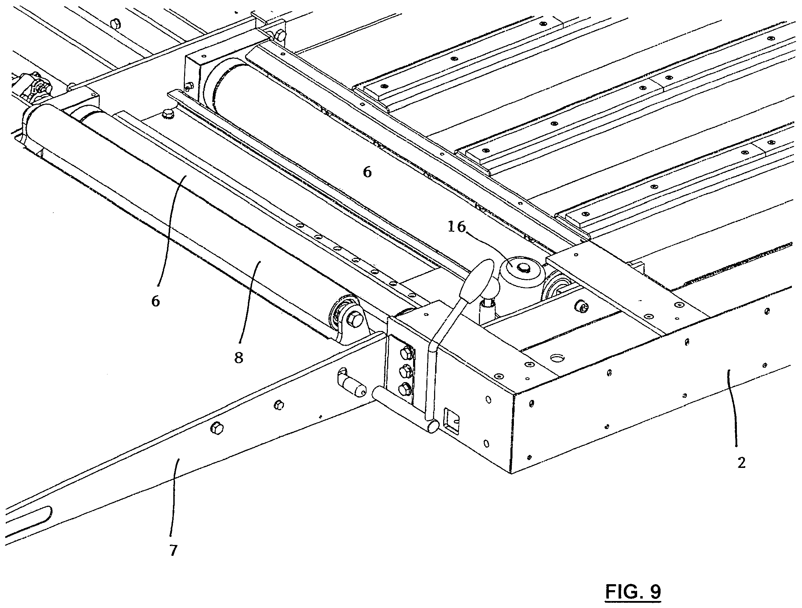

Fig. 1 shows the test stand **1** for motor vehicles. The test stand **1** comprises the rectangular-shaped supporting frame **2** for horizontal installation on the floor in the motor vehicle testing room, or another suitable surface. The frame is equipped with the cover, which constitutes the safety barrier from rotating parts and at the same time, which comprises the travel-on and walk-on surface. The motor vehicle drives onto the test stand **1** by means of the access ramps **7,** which allow to drive onto the test stand **1** from front or rear. The test stand **1** is equipped with the front pair **4** and the rear pair **5** of roller assemblies **6.** In the illustrated example of the invention embodiment of the test stand **1,** there are two rollers **6** in each assembly. For each of the assemblies of the front pair **4**, the retractable safety roller **8** is fabricated, which in the extended position prevents the front wheels of the motor vehicle from running out of the test stand **1.** The rollers **6** are arranged inside the supporting frame **2**. The energy dissipator **3** is attached to the supporting frame **2**, which is in the illustrated example in Fig. 1 hidden under the cover and is generally designated with index **3.** The rollers **6** in the assemblies of the front pair **4** arranged closer to the rear part of the test stand **1** are installed lower than the other rollers **2** of the assemblies (see Fig. 8 and Fig. 9). The size of the diameter of rollers **6** is below 200 mm to ensure that the supporting frame **2** is not too high and the vehicles could smoothly drive onto the test stand **1**.

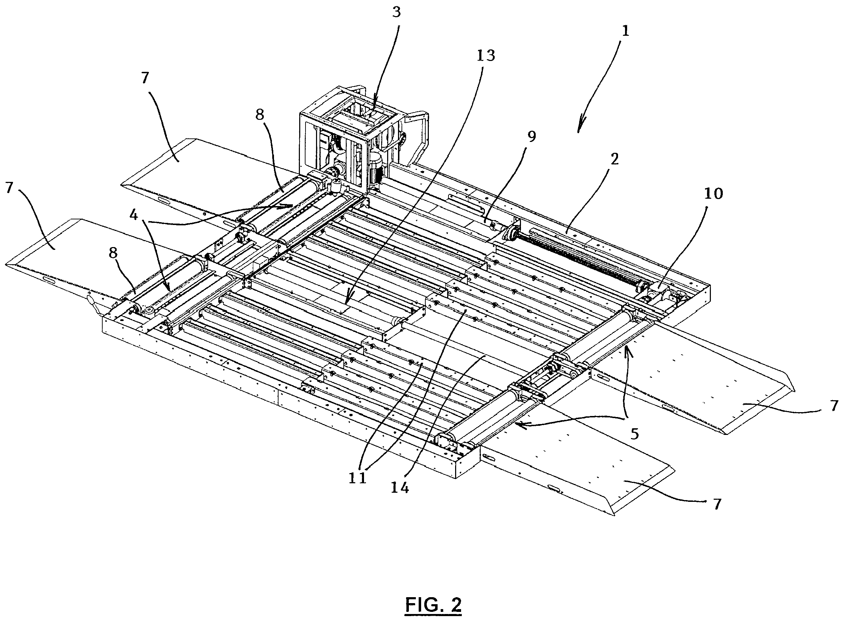

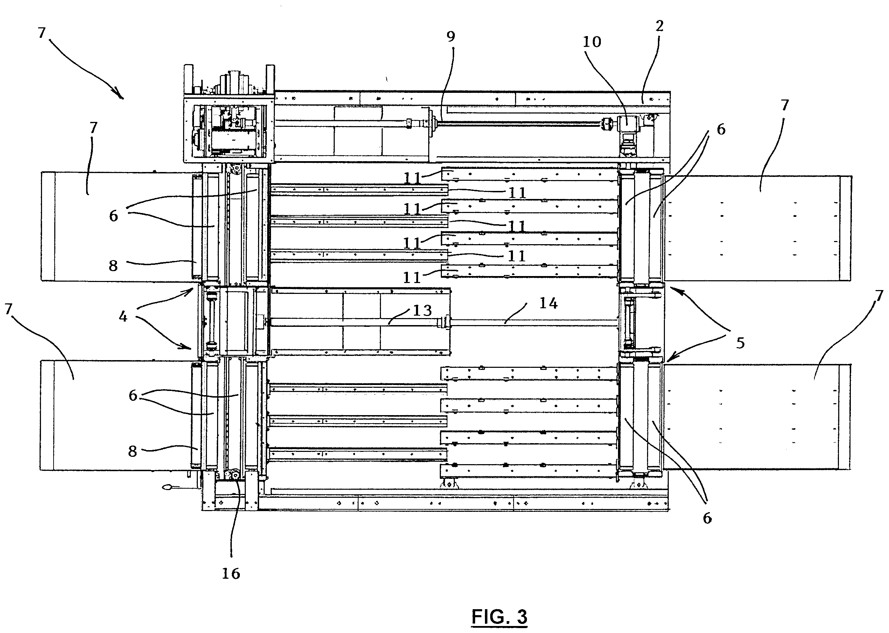

Fig. 2 and Fig. 3 show the test stand **1** without the cover. The front pair **4** of the assemblies and the rear pair **5** of the assemblies are coupled to each other by means of the telescopic shaft **9** and the transmission device **10** composed of the gearbox. The test stand **1** allows to the change the distance lying between the front pair **4** and the rear pair **5** for the wheelbase of the motor vehicle being tested, while the telescopic shaft **9** is adapted to the change in distance. In addition, the guide rods **11** are visible, which with one end are attached to the roller assemblies **6** and with the other are directed to the opposite assembly of rollers. The guide rods **11** fit together. The distance is adjusted by means of the internal threaded bushing **13** attached to the front pair **4** of the assemblies and the threaded rod **14** attached to the rear pair **5** of the assemblies. While the bushing **13** rotates, the thread draws the threaded rod **14** therein, which moves the rear pair **5** of the roller assemblies **6.** The rolling pulleys are formed on the guide rods **11** to move the cover on pulleys with the minimum resistance when the distance between the roller assemblies **6** changes.

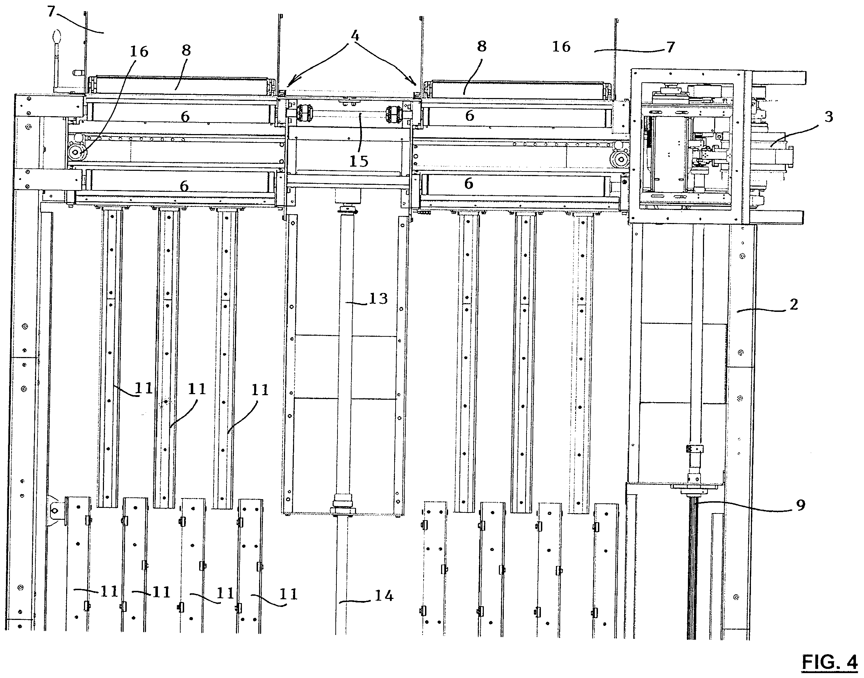

Fig. 4 shows a close-up top view of the front pair **4** of roller assemblies **6.** The assemblies include two rollers **6,** while the rollers **6** are arranged closer to the front part of the test stand **1** and coupled by means of the connecting shaft **15.** The motor vehicle wheels transmit internal combustion engine power to the rollers **6,** where from power is introduced into the energy dissipator **3.** The connection of the energy dissipator **3** is not visible in a view in Fig. 4 and will be illustrated in one of the following figures. The test stand **1** is equipped with the side safety rollers **16** (detail in Fig. 9). The side safety rollers **16** are sliding adjustable on a horizontal surface of the front part of the test stand **1** in the area of the front pair **4** of roller assemblies **6,** while they define the clearance in the slipping of front wheels of the motor vehicle sideways when rolling on the rollers **6** during the test.

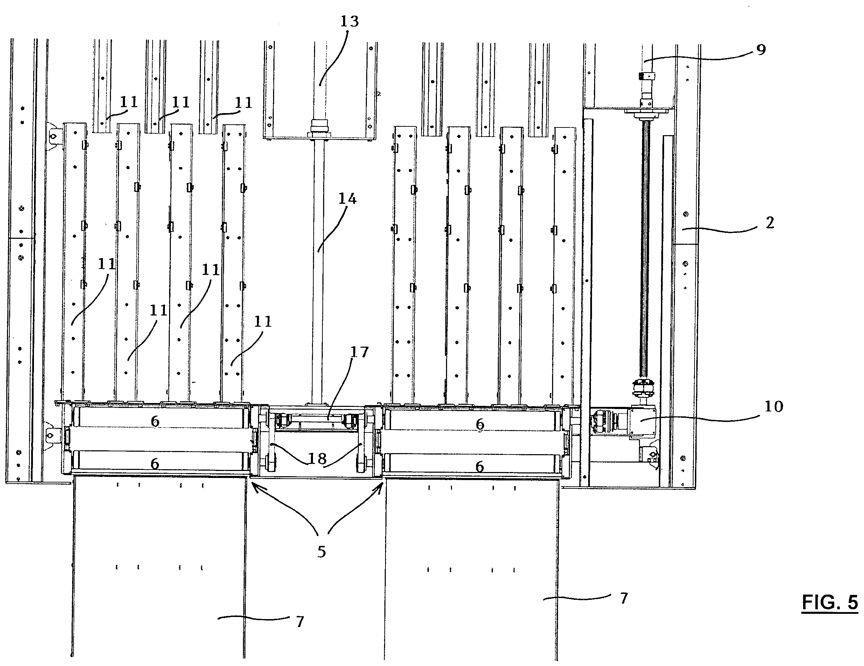

Fig. 5 shows a close-up view of the rear part of the test stand **1**. The rollers **6** of the rear pair **5** of assemblies are coupled to each other by means of the belts **18** and the connecting shaft **17.** At the same time, the connection of the rear pair **5** of roller assemblies **6** to the transmission device **10** and to the telescopic shaft **9** for energy transmission to the non-illustrated energy dissipator **3** is depicted. The transmission device **10** is attached to the sliding rear pair **5** of roller assemblies **6.** In another non-illustrated version of the test stand **1,** the transmission device **10** is attached to the supporting frame **2** by means of a linear guide attached to the supporting frame **2** and the rollers attached to the covering of the transmission device **10.**

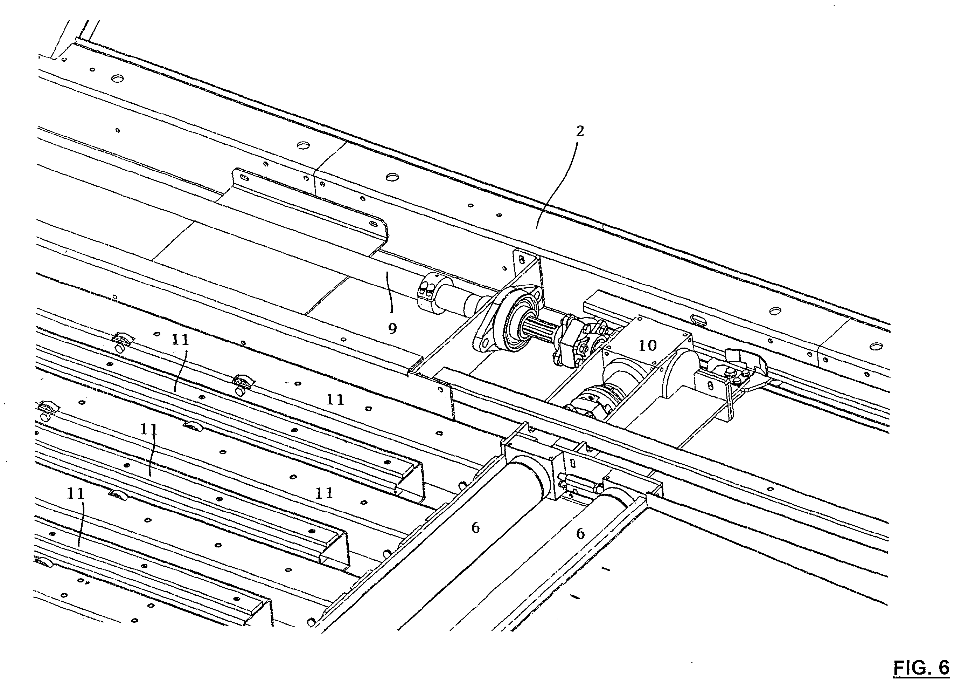

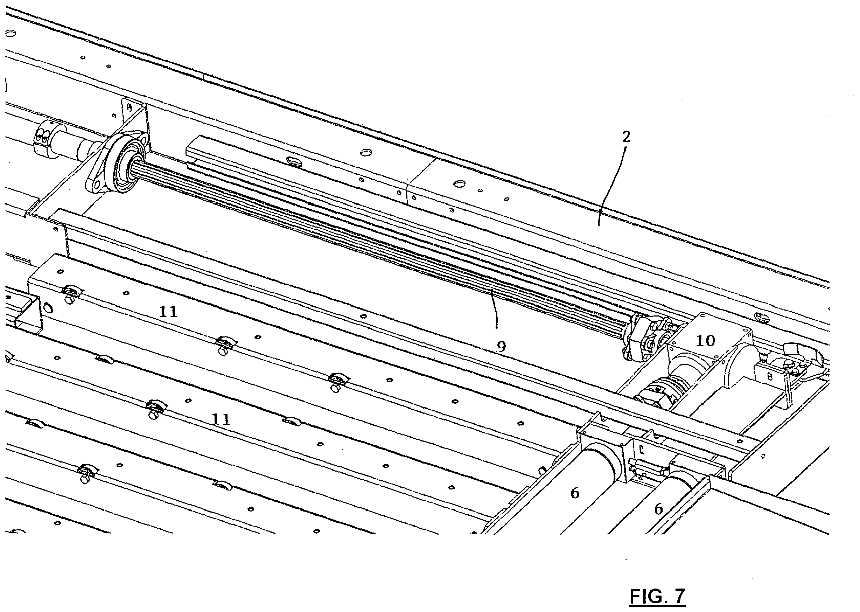

Fig. 6 and Fig. 7 show a close-up axonometric view of the telescopic shaft **9.** Fig. 6 shows the telescopic shaft **9** in one of its end positions for the minimum wheelbase of the motor vehicle. Fig. 7 shows the telescopic shaft **9** in the other of its end positions for the maximum wheelbase of the motor vehicle.

Fig. 8 shows a close-up axonometric view of rotating internal threaded bushing drive **13.** The bushing **13** is equipped with a gear wheel, with the chain **19** mounted thereon. At the same time, the chain **19** is mounted on the drive gear coupled to the electric motor **20.**

Fig. 9 illustrates a close-up axonometric view of one assembly of the front pair **4** of the roller assemblies **6,** including unfolded safety roller **8** to prevent the vehicle wheels from running out of the test stand **1.** In addition, the side safety roller **16** is visible, which prevent the motor vehicle wheel from slipping sideways during the load test.

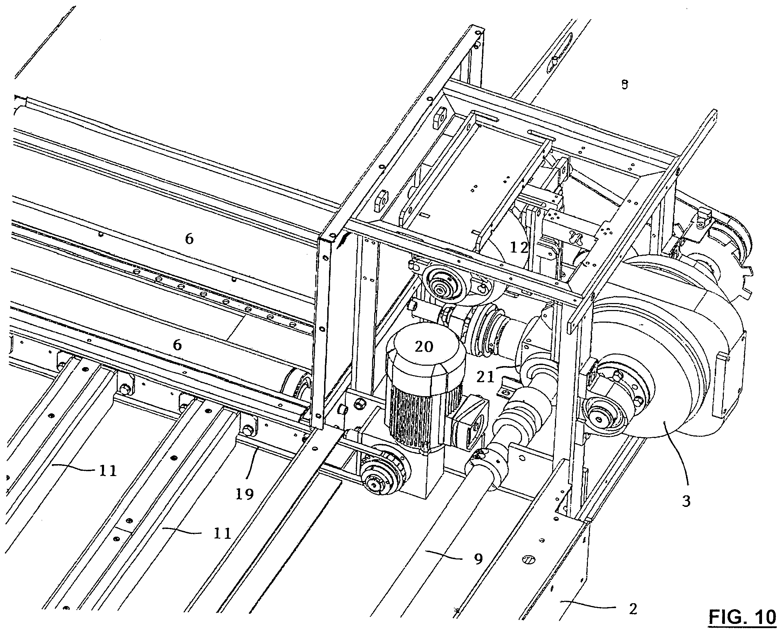

Fig. 10 illustrates a close-up axonometric view of the attachment of the energy dissipator **3** to the supporting frame **2** of the test stand **1**. The energy dissipator **3** comprises a retarder, which is coupled to the rollers **6** through the gearbox **21** and the belt transmission not illustrated in Fig. 10.

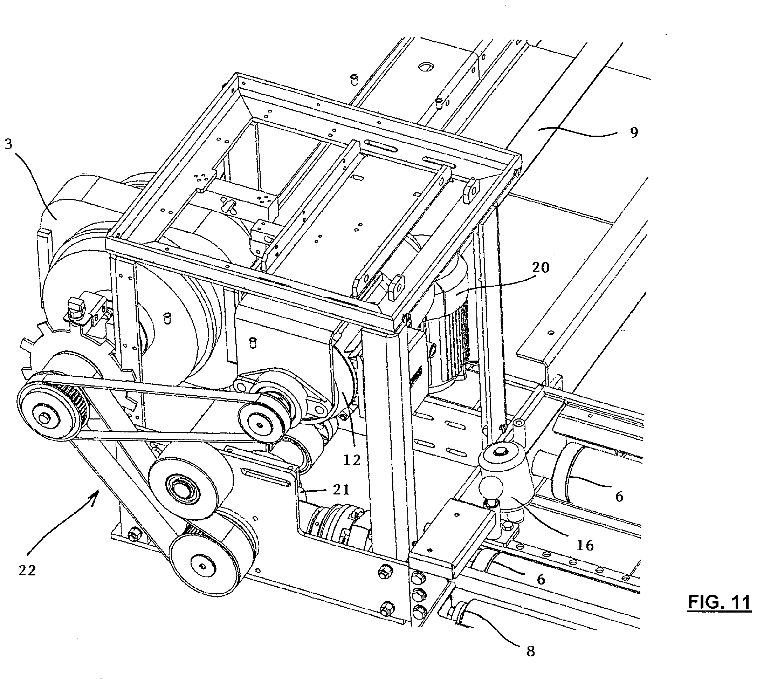

Fig. 11 illustrates a close-up axonometric view of the belt transmission **22** between the energy dissipator **3** and the driving device **12.**

Before placing the vehicle on the test stand **1,** the measurement of mechanical losses of the test stand **1** shall be taken in a manner that the rollers **6** are spun by the driving device **12** with the use of the known amount of mechanical energy. The front wheels of the vehicle then run into the front pair **4** of roller assemblies **6** so that the wheel is in contact with both rollers **6.** The distance between the front pair **4** and the rear pair **5** of the roller assemblies **6** is adjusted in such a manner that the rear wheels of the vehicle seat into the rear pair **5** of roller assemblies **6.** Adjusting the distance to the corresponding wheelbase of the vehicle is carried out by means of the electric motor **20** spinning the internal threaded bushing **13.** The threaded rod **14** is inserted into the bushing **13** or extended out of the bushing **13,** which moves the rear pair **5** of roller assemblies **6.** Subsequently, the front wheels are locked by opening the safety rollers **8** and installing the side safety rollers **16.** The vehicle is then started up and the testing program is launched, in which the vehicle wheels are driven by rollers **6** of the test stand **1** with the defined load and the emission testing is carried out at the same time.

The emission analyzer can be connected to the electronics of the test stand **1,** e.g. for recording of the data provided by physical quantity sensors such as tachometers, dynamometers, etc., or electronic safety devices such as optoelectronic barrier, distance sensor, etc.

### Industrial applicability

The test stand for motor vehicles according to the invention can be particularly employed at emission testing stations, motor vehicle testing rooms, at inspection and servicing workplaces for motor vehicles, in development centres, etc.

### Overview of the indexes

- 1: test stand
- 2: supporting frame
- 3: energy dissipator
- 4: front pair of roller assemblies
- 5: rear pair of roller assemblies
- 6: rollers
- 7: access ramp
- 8: safety roller
- 9: telescopic shaft
- 10: transmission device
- 11: guide rod
- 12: driving device
- 13: rotating internal threaded bushing
- 14: threaded rod
- 15: connecting shaft of the front pair of roller assemblies
- 16: side safety roller
- 17: connecting shaft of the rear pair of roller assemblies
- 18: belt
- 19: chain
- 20: electric motor
- 21: gearbox
- 22: belt transmission

## Claims

1. The test stand (1) for motor vehicles comprising at least partially covered square- or rectangular-shaped supporting frame (2) adapted to horizontal installation on the floor, at least one access ramp (7) to move motor vehicle wheels on the supporting frame (2), at least one energy dissipator (3) attached to the supporting frame (2), at least one assembly of at least two rollers (6) to roll motor vehicle wheels arranged inside the supporting frame (2), while at least one roller assembly (6) is coupled to the energy dissipator (3) to transmit energy from the motor vehicle wheels to the energy dissipator (3), **characterized in that** in its front half, the test stand (1) is equipped with two roller assemblies (6) constituting the front pair (4) of roller assemblies (6); furthermore, in its rear half, the test stand (1) is equipped with two roller assemblies (6) constituting the rear pair (5) of roller assemblies (6), when the rear pair (5) of roller assemblies (6) in the supporting frame (2) is arranged with the possibility of movement to set the distance from the front pair (4) of roller assemblies (6) to adjust the wheelbase of the motor vehicle tested, and at the same time, the rollers (6) have the maximum diameter below 200 mm and are coupled to each other in a movable manner to enable their common spinning by motor vehicle wheels.

2. The test stand according to claim 1, **characterized in that** the front rollers (6) of the front pair (4) of roller assemblies (6) have the horizontal tangential plane lying higher than the horizontal tangential plane of the remaining rollers (6) of the front pair (4) of roller assemblies (6).

3. The test stand according to claim 1 or 2, **characterized in that** it is equipped with at least one folding safety roller (8) parallel to the rollers (6) and arranged in front of the front pair (4) of roller assemblies (6), while the horizontal tangential plane of the folding safety roller (8) in unfolded position lies higher than the horizontal tangential planes of the rollers (6) of the front pair (4) of roller assemblies (6).

4. The test stand according to any of claims 1 to 3, **characterized in that** the front pair (4) of roller assemblies (6) and the rear pair (5) of roller assemblies (6) are interconnected to set the distance from each other by means of the rotating internal threaded bushing (13) and the threaded rod (14) at least partially arranged in the rotating bushing (13), while the rotating bushing (13) is arranged in the front half of the test stand (1) and the threaded rod (14) is arranged in the rear half of the test stand (1).

5. The test stand according to any of claims 1 to 4, **characterized in that** the front pair (4) of roller assemblies (6) and the rear pair (5) of roller assemblies (6) are coupled to each other in a movable manner by means of at least one telescopic shaft (9) arranged inside the supporting frame (2).

6. The test stand according to any of claims 1 to 5, **characterized in that** it is equipped with the driving device (12) coupled in a movable manner to the rollers (6) in order to spin them.

7. The test stand according to any of claims 1 to 6, **characterized in that** it is equipped with at least one physical quantity sensor of the group of tachometer, dynamometer, and/or at least one electronic safety device of the group of optoelectronic barrier, distance sensor.
